# EUROPÄISCHE PATENTSCHRIFT

(11) **EP 1 205 273 B1**
(45) Veröffentlichungstag und Bekanntmachung des Hinweises auf die Patenterteilung: **27.09.2006**
(21) Anmeldenummer: 00203988.1
(22) Anmeldetag: 14.11.2000
(51) Int. Cl.: B23C 5/08, B23B 27/04, B23D 61/06

(54) **Spanabhebendes Werkzeug**
Cutting tool
Outil de découpage

(43) Veröffentlichungstag der Anmeldung: 15.05.2002
(73) Patentinhaber: CERATIZIT Austria Gesellschaft m.b.H., 6600 Reutte /Tirol (AT)
(72) Erfinder: Trenkwalder, Thomas, 6600 Ehenbichl (AT); Male, Helmut, 6600 Höfen (AT)

(56) Entgegenhaltungen:
- EP-A- 0 312 223
- WO-A-95/13892
- DE-A- 3 828 657

## Beschreibung

Die Erfindung betrifft ein spanabhebendes Werkzeug, bestehend aus einem scheibenförmigen oder klingenförmigen Grundkörper mit mindestens einer Ausnehmung zur Aufnahme eines Schneideinsatzes mit unterer, oberer und rückwärtiger Anlagefläche, der in der Ausnehmung durch einen elastisch aufspreizbaren Klemmarm der die obere Anlagefläche der Ausnehmung bildet auswechselbar festgeklemmt ist, wobei der Schneideinsatz und die Ausnehmung an ihren gegenseitigen Anlageflächen formschlüssig ausgeführt sind.

Das sogenannte "Selbstklemmprinzip" bei dem die Schneideinsätze in einer Ausnehmung des Werkzeuggrundkörpers durch einen Teil des Werkzeuggrundkörpers der als federnder Klemmarm ausgebildet ist festgeklemmt werden, kommt vor allem bei langen, schmalen Schneideinsätzen zum Einsatz, wie sie bei Werkzeugen zum Ein- oder Abstechen oder auch bei Scheibenfräsern verwendet werden.
Die Klemmkraft die den Schneideinsatz in der Aufnahme festklemmt, entspricht der Federkraft des Klemmarmes der entweder unter Klemmkontakt beim Einschieben des Schneideinsatzes in die Aufnahme automatisch aufgespreizt wird, oder der vor dem Einschieben des Schneideinsatzes durch ein geeignetes Werkzeug über die Klemmposition hinaus aufgespreizt wird, wodurch die Positionierung des Schneideinsatzes in der Aufnahme erleichtert wird.

Die maximal aufbringbare Klemmkraft ist aus konstruktiven oder werkstofftechnischen Gründen begrenzt, so dass es insbesondere bei Scheibenfräsern bei denen im Einsatz hohe Fliehkräfte auftreten, oder auch bei Einstechwerkzeugen beim Rückzug des Werkzeuges aus der Nut oder bei Ausdrehoperation zu einem Rückzug des Schneideinsatzes aus der Aufnahme kommen kann.

Es ist daher bei diesen Werkzeugen wichtig, ausreichende Maßnahmen gegen ein unbeabsichtigtes Herausziehen der Schneideinsätze aus der Aufnahme zu treffen.

Die DE OS 30 44 790 beschreibt einen Scheibenfräser, bei dem die Schneideinsätze keilförmig ausgeführt sind und ihre Klemmung im Werkzeuggrundkörper durch Verkeilung in dem ebenfalls keilförmig ausgeführten Aufnahmeschlitz von dem ein Schenkel teilweise federnd ausgeführt ist, erreicht wird.
Nachteilig dabei ist, dass der Schneideinsatz keinen definierten Tiefenanschlag besitzt, so dass es entweder zu einem zu starken Verkeilen und damit schwierigen Lösen des Schneideinsatzes beim Wechsel oder aber zu einem zu geringen Verkeilen und damit zu einem unbeabsichtigten Lösen des Schneideinsatzes durch Fliehkräfte beim Betrieb des Werkzeuges kommen kann.
Darüberhinaus ist eine genaue Positionierung der einzelnen Schneidkanten zueinander nur schwer möglich.

Die EP 0 660 785 beschreibt ein spanabhebendes Werkzeug der eingangs genannten Art, insbesondere ein Stechwerkzeug, bei dem der Schneideinsatz an seiner dem Klemmarm zugewandten Anlagefläche mehrere unterschiedlich geneigte Teilflächen aufweist, wobei der Klemmarm in definierter Weise an zwei unterschiedlichen Teilflächen angreift, wodurch der Schneideinsatz auch bei Zugbeanspruchungen nicht ohne weiteres aus der Klemmposition herausgezogen werden soll.
Nachteilig bei einer derartigen Ausführung ist, dass die Klemmkraft zum großen Teil in Richtung der unteren Anlagefläche des Schneideinsatzes wirkt und der Anteil der Klemmkraft der den Schneideinsatz gegen den rückwärtigen Anschlag und damit gegen ein Herausziehen aus der Aufnahme schützt nur sehr klein ist, so dass es auch bei einer derartigen Ausführung in vielen Einsatzfällen noch zu einem Herausziehen des Schneideinsatzes aus der Aufnahme kommen kann.

Aufgabe der vorliegenden Erfindung ist es daher, ein spanabhebendes Werkzeug der eingangs genannten Art zu schaffen, bei dem der Schneideinsatz leicht in die Aufnahmeausnehmung eingesetzt werden kann und gleichzeitig in Klemmposition eine sichere Fixierung auch gegen starke Zug- oder Fliehkraftbeanspruchungen gewährleistet ist.

Erfindungsgemäß wird dies dadurch erreicht, dass die untere Anlagefläche des Schneideinsatzes von einem konvexen Kreisbogen mit dem Radius R begrenzt wird und dass die untere Anlagefläche der Ausnehmung von einem konkaven Kreisbogen mit dem Radius r begrenzt wird, wobei R > r ist, wodurch zwei definierte Anlagepunkte A am Anfang und Ende der Anlageflächen gebildet sind, dass weiters die obere Anlagefläche des Schneideinsatzes und die Anlagefläche des Klemmarmes so aufeinander abgestimmt sind, dass die Beaufschlagung der Anlagefläche mit der Klemmkraft in einem Bereich erfolgt, der von einer Symmetrielinie S in Richtung auf die aktive Schneidkante des Schneideinsatzes zu beabstandet ist, wobei die Symmetrielinie S die Normale auf die Verbindungsgerade V der beiden Anlagepunkte A ist, welche den Abstand der beiden Anlagepunkte A halbiert.

Durch die erfindungsgemäße kreisbogenförmige Ausgestaltung der unteren Anlageflächen und durch die gegenüberliegend exzentrisch aufgebrachte Klemmkraft wird erreicht, dass die Klemmkraft zu etwa 60 % auf die untere Anlageflächen und zu etwa 40 % auf die rückseitigen Anlageflächen wirkt. Die kreisbogenförmige Ausgestaltung der unteren Anlageflächen kann jeweils über die vollständige Anlagefläche oder auch nur über die Abschnitte am Anfang und Ende der Anlagefläche im unmittelbaren Bereich der gegenseitigen Anlagepunkte A erfolgen. Der Unterschied der Radien der beiden Anlageflächen kann sehr gering sein und wird in der Praxis wenige Zehntel mm betragen.
Insbesondere in Verbindung mit einer Neigung der rückwärtigen Anlageflächen in Richtung auf die aktive Schneidkante des Schneideinsatzes zu, so dass sie mit der Verbindungslinie V der Anlagepunkte A einen spitzen Winkel α einschließen, wird eine gute Verkeilung des Schneideinsatzes in der Aufnahme bewirkt und ein Herausziehen des Schneideinsatzes aus der Aufnahme durch auftretende Zug- oder Fliehkräfte verhindert.
Zur definierten Aufbringung der Klemmkraft im erfindungsgemäßen Bereich auf den Schneideinsatz muss die Ausnehmung für den Schneideinsatz so ausgelegt werden, dass sie im erfindungsgemäßen Bereich die geringste Schlitzbreite aufweist.

Dadurch, dass der Radius r des Kreisbogens der unteren Anlagefläche der Ausnehmung kleiner ist als der Radius R des Kreisbogens der dazugehörigen Anlagefläche des Schneideinsatzes, wird theoretisch - in Seitenansicht gesehen - eine genau definierte Zweipunktauflage erreicht. In der Praxis kommt es_dann aufgrund der geringfügig unterschiedlichen Radien der Anlageflächen sowie hoher Flächenpressungen zu linienförmigen oder flächenförmigen "Anlagepunkten", die sich aufgrund von Fertigungstoleranzen oder Maßänderungen durch häufigen Wechsel des Schneideinsatzes geringfügig vom theoretischen Anlagepunkt verschieben können.

In einer bevorzugten Ausführungsform der Erfindung ist die untere Anlagefläche des Schneideinsatzes vollständig als Kreisbogen mit dem Radius R ausgeführt, während die untere Anlagefläche der Ausnehmung nur am Anfang und Ende als Kreisbogen mit dem Radius r ausgeführt ist, während der dazwischenliegende Abstand durch eine Freistellung vom Kreisbogen r beabstandet ist.
Auf diese Art und Weise wird eine besonders leichte Einführbarkeit und Positionierung des Schneideinsatzes in der Ausnehmung erreicht.

In einer weiteren vorteilhaften Ausgestaltung der Erfindung ist die obere Anlagefläche des Schneideinsatzes als Gerade normal zur Symmetrielinie S ausgeführt und erfolgt die Aufbringung der Klemmkraft an einem Kontaktpunkt K von der ebenfalls als Gerade ausgeführten Anlagefläche des Klemmarmes.
Auf diese Art und Weise wird eine besonders gute Übertragung der Klemmkraft auf die rückwärtigen Anlageflächen erreicht.

Als besonders vorteilhaft hat es sich erwiesen, die Anlageflächen des Schneideinsatzes und der Ausnehmung im Querschnitt V-förmig auszuführen, wodurch ein Verdrehen und Aufkippen des Schneideinsatzes in der Ausnehmung mit Sicherheit verhindert wird.

Im folgenden wird die Erfindung an Hand von Figuren näher beschrieben.
Es zeigen:

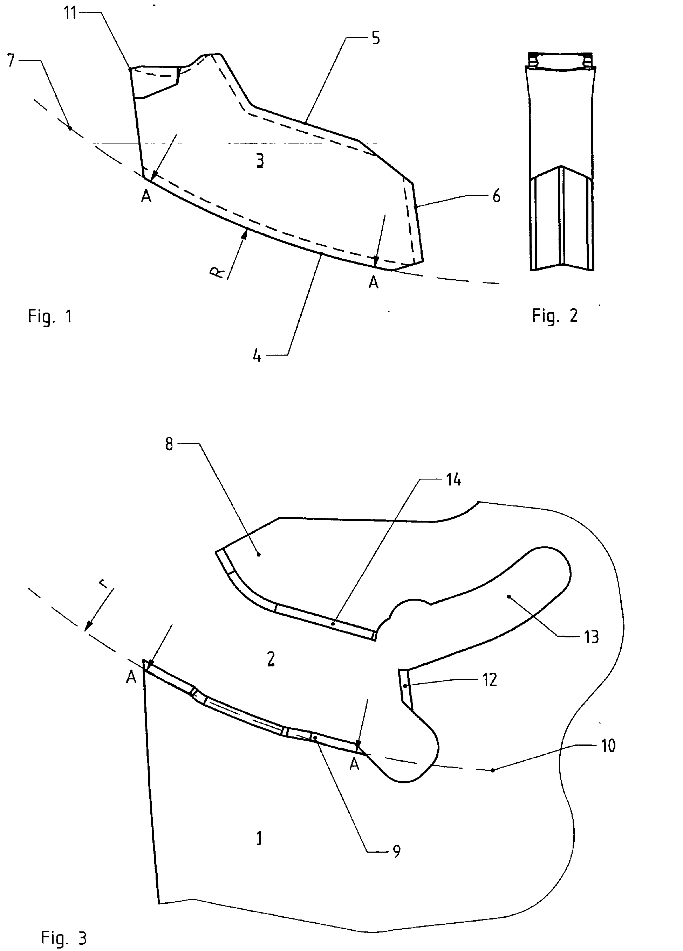

- Figur 1: den Schneideinsatz für ein erfindungsgemäßes spanabhebendes Werkzeug in Seitenansicht
- Figur 2: den Schneideinsatz nach Figur 1 in Stimansicht
- Figur 3: die Ausnehmung für den Schneideinsatz nach Figur 1 in Seitenansicht
- Figur 4: den Schneideinsatz nach Figur 1 in festgeklemmter Position in der Ausnehmung in Seitenansicht

Der Schneideinsatz -3- für ein erfindungsgemäßes spanabhebendes Werkzeug, z.B. einen Scheibenfräser, weist eine längliche, prismatische Form mit einer Schneidkante -11- auf. Zur Positionierung des Schneideinsatzes -3- in der Ausnehmung -2- des Werkzeuggrundkörpers -1- weist der Schneideinsatz -3- eine untere Anlagefläche -4-, eine obere Anlagefläche -5- sowie eine rückwärtige Anlagefläche -6- auf, die mit einer unteren Anlagefläche -9-, einer oberen Anlagefläche -14- sowie einer rückwärtigen Anlagefläche -12- der Ausnehmung -2- in gegenseitigem Kontakt stehen. Die Anlageflächen -4-, -6- und -5- des Schneideinsatzes -3- sind im Querschnitt gesehen V-förmig konkav ausgeführt, während die Anlageflächen -9-, -12- und -14- der Ausnehmung -2- im Querschnitt V-förmig konvex ausgeführt sind. Dadurch wird eine gute seitliche Stabilisierung des Schneideinsatzes -3- in der Ausnehmung -2- erreicht.

Die obere Anlagefläche -14- der Ausnehmung -2- ist der Abschnitt eines Klemmarmes -8- der infolge einer schlitzförmigen Verlängerung -13- der Ausnehmung -2- elastisch aufspreizbar ist. Im entspannten Zustand des Klemmarmes -8- ohne eingeschobenen Schneideinsatz -3- ist die Höhe der Ausnehmung -2- im Bereich des Klemmpunktes K kleiner als die Höhe des Schneideinsatzes -3- in diesem Bereich, so dass bei eingeschobenem Schneideinsatz -3- der Klemmarm -8- aufgespreizt ist und der Schneideinsatz -3- durch seine Federkraft in der Ausnehmung festgeklemmt wird.

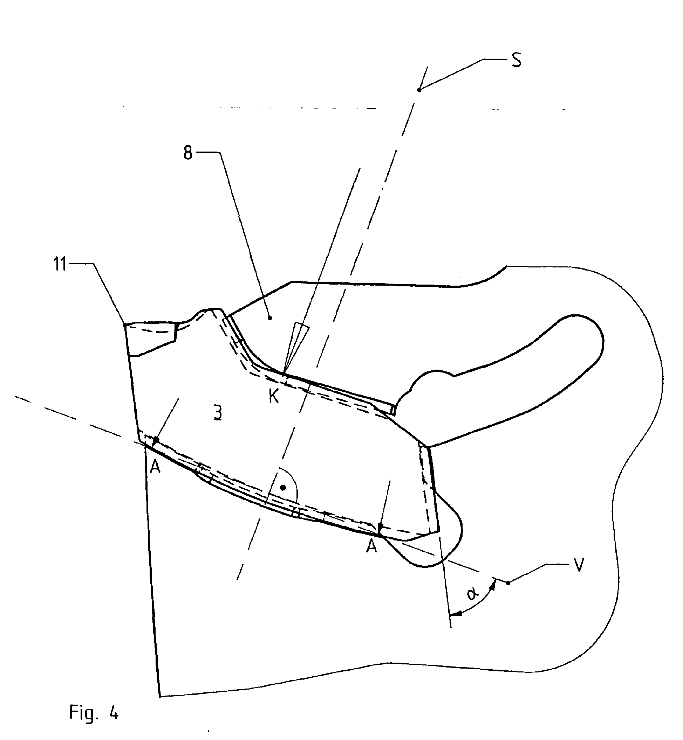

Zum Einsetzen des Schneideinsatzes -3- wird am zweckmäßigsten der Klemmarm -8- mit einem geeigneten Werkzeug aufgespreizt das in der schlitzförmigen Verlängerung -13- eingreift und sich am Werkzeuggrundkörper -1- abstützt. Dann kann der Schneideinsatz -3- problemlos eingeschoben und positioniert werden.
Erfindungsgemäß liegen die Konturen der unteren Anlagenfläche -4- des Schneideinsatzes vollständig auf einem konvexen Kreisbogen -7- mit dem Radius R.
Die Konturen der unteren Anlagefläche -9- der Ausnehmung -2- liegen nur am Anfang und Ende auf einem konkaven Kreisbogen -10- dessen Radius r geringfügig kleiner als der Radius R des Schneideinsatzes ist, während der dazwischenliegende Abschnitt vom Kreisbogen -10- beabstandet ist, so dass sich eine Freistellung des Schneideinsatzes -3- ergibt.
Auf diese Weise wird - in Seitenansicht gesehen - eine theoretisch genau definierte Zweipunktanlage der unteren Anlagefläche -4- des Schneideinsatzes -3- am Anfang und Ende der Anlagefläche -9- in der Ausnehmung -2- erreicht.
Die obere Anlagefläche -5- des Schneideinsatzes -3- und die obere Anlagefläche -14- der Ausnehmung -2- sind - in Seitenansicht gesehen - als Gerade ausgeführt, wobei die beiden Anlageflächen -5-, -14- einen geringfügigen spitzen Winkel miteinander einschließen, was in Figur 4 dargestellt ist. Auf diese Weise kommt es zu einer theoretisch genau definierten Festlegung des Kontaktpunktes K. Die Symmetrielinie S ist als Normale auf die Verbindungsgerade V der beiden Anlagepunkte A der unteren Anlageflächen -4- und -9-, welche den Abstand der beiden Anlagepunkte A halbiert, definiert.
Wichtig ist, dass die übrigen Bereiche der Anlageflächen -5- und -14-, die von der Symmetrielinie S in Richtung von der Schneidkante weg beabstandet sind freigestellt sind. Die rückwärtigen Anlageflächen -6- und -12- sind - in Seitenansicht gesehen - als Gerade ausgeführt, die auf die Schneidkante -11- zu geneigt sind, und mit der Verbindungslinie V der Anlagepunkte A der unteren Anlageflächen -4-, -9- einen spitzen Winkel α einschließen.

Auf diese Art und Weise wird der Schneideinsatz -3- durch die exzentrisch angreifende Klemmkraft über die kurvenförmigen Anlageflächen -4-, -9- nach hinten gedrückt und die rückwärtigen Anlageflächen -6-, -12- gut gegeneinander verkeilt.

## Patentansprüche

1. Spanabhebendes Werkzeug, bestehend aus einem scheibenförmigen oder klingenförmigen Grundkörper (1) mit mindestens einer Ausnehmung (2) zur Aufnahme eines Schneideinsatzes (3) mit unterer (4), oberer (5) und rückwärtiger Anlagefläche (6), der in der Ausnehmung (2) durch einen elastisch aufspreizbaren Klemmarm (8), der die obere Anlagefläche (14) der Ausnehmung (2) bildet, auswechselbar festgeklemmt ist, wobei der Schneideinsatz (3) und die Ausnehmung (2) an ihren gegenseitigen Anlageflächen formschlüssig ausgeführt sind,
**dadurch gekennzeichnet,**
**dass** die untere Anlagefläche (4) des Schneideinsatzes (3) von einem konvexen Kreisbogen (7) mit dem Radius R begrenzt wird und dass die untere Anlagefläche (9) der Ausnehmung (2) von einem konkaven Kreisbogen (10) mit dem Radius r begrenzt wird, wobei R > r ist, wodurch zwei definierte Anlagepunkte A am Anfang und Ende der Anlageflächen (4,9) gebildet sind, dass weiters die obere Anlagefläche (5) des Schneideinsatzes (3) und die Anlagefläche (14) des Klemmarmes (8), so aufeinander abgestimmt sind, dass die Beaufschlagung der oberen Anlagefläche (5) mit der Klemmkraft in einem Bereich erfolgt, der von einer Symmetrielinie S in Richtung auf die aktive Schneidkante (11) des Schneideinsatzes (3) zu beabstandet ist, wobei die Symmetrielinie S die Normale auf die Verbindungsgerade V der beiden Anlagepunkte A ist, welche den Abstand der beiden Anlagepunkte A halbiert.

2. Spanabhebendes Werkzeug nach Anspruch 1, **dadurch gekennzeichnet, dass** die rückwärtigen Anlageflächen (6,12) von Schneideinsatz (3) und Ausnehmung (2) auf die aktive Schneidkante (11) zu geneigt sind, so dass sie mit der Verbindungslinie V der Anlagepunkte A einen spitzen Winkel α einschließen.

3. Spanabhebendes Werkzeug nach Anspruch 1 oder 2, **dadurch gekennzeichnet, dass** die untere Anlagefläche (4) des Schneideinsatzes (3) vollständig als Kreisbogen (7) mit dem Radius R ausgeführt ist und die untere Anlagefläche (9) der Ausnehmung (2) nur am Anfang und Ende als Kreisbogen (10) mit dem Radius r ausgeführt ist, während der dazwischen liegende Abschnitt vom Kreisbogen (10) beabstandet ist.

4. Spanabhebendes Werkzeug nach einem der Ansprüche 1 bis 3, **dadurch gekennzeichnet, dass** die obere Anlagefläche (5) des Schneideinsatzes (3) als Gerade normal zur Symmetrielinie S ausgeführt ist, und dass die Aufbringung der Klemmkraft an einem Kontaktpunkt K von der ebenfalls als Gerade ausgeführten Anlagefläche (14) des Klemmarmes (8) erfolgt.

5. Spanabhebendes Werkzeug nach einem der Ansprüche 1 bis 4, **dadurch gekennzeichnet, dass** die Anlageflächen (4,5,6) des Schneideinsatzes (3) und die Anlageflächen (9,12,14) der Ausnehmung (2) im Querschnitt V-förmig ausgeführt sind.

6. Spanabhebendes Werkzeug nach einem der Ansprüche 1 bis 5, **dadurch gekennzeichnet, dass** es als Scheibenfräser ausgeführt ist.

## Claims

1. Metal-cutting tool consisting of a disc-shaped or blade-shaped base member (1) having at least one clearance (2) for receiving a cutting insert (3) which has a lower (4), an upper (5) and a rearward (6) bearing surface and which is gripped fast, in an interchangeable manner, in said clearance (2) by a gripping arm (8) which is capable of expanding in an elastic manner and which forms the upper bearing surface (14) of said clearance (2), wherein the cutting insert (3) and the clearance (2) are of form-locking design at their reciprocal bearing surfaces,
**characterised in that**
the lower bearing surface (4) of the cutting insert (3) is bounded by a convex circular arc (7) having the radius R and that the lower bearing surface (9) of the clearance (2) is bounded by a concave circular arc (10) having the radius r, wherein R > r, as a result of which two defined bearing points A are formed at the beginning and end of the bearing surfaces (4, 9), and that, moreover, the upper bearing surface (5) of the cutting insert (3) and the bearing surface (14) of the gripping arm (8) are coordinated with one another in such a way that said upper bearing surface (5) is acted upon by the gripping force in a region which is at a distance from a line of symmetry S in the direction of the active cutting edge (11) of the cutting insert (3), the line of symmetry S being the normal onto the straight line V connecting the two bearing points A, which normal halves the distance between said two bearing points A.

2. Metal-cutting tool according to claim 1, **characterised in that** the rearward bearing surfaces (6, 12) of the cutting insert (3) and clearance (2) are inclined towards the active cutting edge (11), so that they form an acute angle α with the line V connecting the bearing points A.

3. Metal-cutting tool according to claim 1 or 2, **characterised in that** the lower bearing surface (4) of the cutting insert (3) is designed, in its entirety, as a circular arc (7) having the radius R and the lower bearing surface (9) of the clearance (2) is designed, only at the beginning and end, as a circular arc (10) having the radius r, while the section lying between said beginning and end is at a distance from said circular arc (10).

4. Metal-cutting tool according to one of claims 1 to 3, **characterised in that** the upper bearing surface (5) of the cutting insert (3) is designed as a straight line normal to the line of symmetry S, and that the gripping force is applied at a contact point K by the bearing surface (14) of the gripping arm (8), which bearing surface is likewise designed as a straight line.

5. Metal-cutting tool according to one of claims 1 to 4, **characterised in that** the bearing surfaces (4, 5, 6) of the cutting insert (3) and the bearing surfaces (9, 12, 14) of the clearance (2) are of V-shaped design in cross-section.

6. Metal-cutting tool according to one of claims 1 to 5, **characterised in that** it is designed as a disc milling cutter.

## Revendications

1. Outil d'enlèvement de copeaux se composant d'un corps de base (1) en forme de disque ou en forme de lame, comportant au moins un évidement (2) pour recevoir une plaquette de coupe (3) à surfaces d'appui inférieure (4), supérieure (5) et arrière (6) qui est fermement fixée de façon interchangeable dans l'évidement (2) au moyen d'un bras de serrage expansible élastiquement (8) qui forme la surface d'appui supérieure (14) de l'évidement (2), la plaquette de coupe (3) et l'évidement (2) étant réalisés pour être en engagement positif à leurs surfaces d'appui opposées,
**caractérisé en ce que**
la surface d'appui inférieure (4) de la plaquette de coupe (3) est limitée par un arc de cercle convexe (7) de rayon R et **en ce que** la surface d'appui inférieure (9) de l'évidement (2) est limitée par un arc de cercle concave (10) de rayon r, où R > r, ce qui forme deux points d'appui définis A au début et à la fin des surfaces d'appui (4, 9), **en ce que** la surface d'appui supérieure (5) de la plaquette de coupe (3) et la surface d'appui (14) du bras de serrage (8) sont en outre adaptées l'une à l'autre d'une manière telle que la force de serrage est exercée sur la surface d'appui supérieure (5) dans une zone qui est éloignée d'une ligne de symétrie S en direction de l'arête de coupe active (11) de la plaquette de coupe (3), la ligne de symétrie S étant la droite qui est normale à la droite V reliant les deux points d'appui A et qui divise par moitiés la distance entre les deux points d'appui A.

2. Outil d'enlèvement de copeaux selon la revendication 1, **caractérisé en ce que** les surfaces d'appui arrière (6, 12) de la plaquette de coupe (3) et de l'évidement (2) sont inclinées vers l'arête de coupe active (11), d'une manière telle qu'elles incluent un angle aigu α avec la ligne V reliant les deux points d'appui A.

3. Outil d'enlèvement de copeaux selon la revendication 1 ou 2, **caractérisé en ce que** la surface d'appui inférieure (4) de la plaquette de coupe (3) consiste totalement en un arc de cercle (7) de rayon R et que la surface d'appui inférieure (9) de l'évidement (2) ne consiste en un arc de cercle (10) de rayon r qu'à son début et à sa fin, tandis que la section située entre ces deux points est éloignée de l'arc de cercle (10).

4. Outil d'enlèvement de copeaux selon l'une quelconque des revendications précédentes, **caractérisé en ce que** la surface d'appui supérieure (5) de la plaquette de coupe (3) consiste en une droite normale à la ligne de symétrie S, et **en ce que** la force de serrage est exercée sur un point de contact K de la surface d'appui (14) du bras de serrage (8), elle aussi en forme de droite.

5. Outil d'enlèvement de copeaux selon l'une quelconque des revendications précédentes, **caractérisé en ce que** les surfaces d'appui (4, 5, 6) de la plaquette de coupe (3) et les surfaces d'appui (9, 12, 14) de l'évidement (2) sont en forme de V en vue en coupe transversale.

6. Outil d'enlèvement de copeaux selon l'une quelconque des revendications précédentes, **caractérisé en ce qu'**il est réalisé sous forme de fraise à disque.
